# EUROPÄISCHE PATENTSCHRIFT

(11) **EP 0 969 218 B1**
(45) Veröffentlichungstag und Bekanntmachung des Hinweises auf die Patenterteilung: **10.11.2004**
(21) Anmeldenummer: 99112218.5
(22) Anmeldetag: 25.06.1999
(51) Int. Cl.: F16D 3/84

(54) **Schutzvorrichtung für eine Antriebsanordnung mit einem Doppelkreuzgelenk**
Protection device for a drive assembly including a double universal joint
Dispositif de protection pour un ensemble d'entraînement avec joint universel double

(30) Priorität: 01.07.1998 DE 19829314
(43) Veröffentlichungstag der Anmeldung: 05.01.2000
(73) Patentinhaber: GKN Walterscheid GmbH, 53797 Lohmar (DE)
(72) Erfinder: Mikeska, Felix, Ing., 53797 Lohmar (DE); Nienhaus, Clemens, Dipl.-Ing., 53819 Neunkirchen-Seelscheid (DE); Wilks, Eberhard, Dipl.-Ing., 56307 Daufenbach (DE)
(74) Vertreter: Harwardt, Günther, Dipl.-Ing.

(56) Entgegenhaltungen:
- EP-A- 0 908 083
- DE-A- 3 820 449
- DE-B- 2 609 069
- US-A- 4 605 332

## Beschreibung

Die Erfindung betrifft eine Schutzvorrichtung für eine Antriebsanordung, die ein Doppelkreuzgelenk mit einer inneren Doppelgabel, einer ersten Gelenkgabel, einer zweiten Gelenkgabel und je ein Gelenkkreuz zur gelenkigen Verbindung der ersten Gelenkgabel und der zweiten Gelenkgabel mit einer der zur Doppelgelenkgabel gehörenden Gabeln aufweist.

In der DE-OS 20 46 236 ist eine Schutzvorrichtung für ein oben näher erläutertes Doppelkreuzgelenk beschrieben. Die Schutzvorrichtung umfaßt einen der ersten Gelenkgabel zugeordneten Schutztopf. Dieser übergreift ein Ende eines Schutzelementes, das auf der inneren Doppelgabel drehbeweglich gelagert ist und die seitlich der Lagerung liegenden Teilbereiche der Doppelgabel überdeckt. Der dem Schutztopf abgewandte Schutzbereich des Schutzelementes ragt in einen Schutztrichter hinein. Der bei Abwinklung des Doppelkreuzgelenkes entstehende Spalt zwischen den Elementen der Schutzvorrichtung ermöglicht den Eingriff von außen, so daß keine ausreichende Sicherheit gegeben ist. Desgleichen ist bei Belastung durch äußere Kräfte kein genügender Widerstand vorhanden, da die Schutzelemente jeweils seitlich offen sind und sich entsprechend verformen können. Dabei kann es zu Berührung mit den sich drehenden Bauteilen des Doppelkreuzgelenkes kommen, wobei Beschädigungen eintreten können, so daß die Schutzfunktion gegen Berührung nicht mehr gewährleistet ist.

Der Erfindung liegt die Aufgabe zugrunde, eine Schutzvorrichtung für eine Antriebsanordnung, die ein Doppelkreuzgelenk aufweist, zu schaffen, die eine sichere Abdeckung der sich drehenden Bauteile des Doppelkreuzgelenkes bewirkt, so daß eine Berührungsmöglichkeit auch bei Abwinklung wirksam verhindert wird.

Diese Aufgabe wird erfindungsgemäß durch eine Schutzvorrichtung gelöst, welche einen Schutztrichter, der ein erstes axiales Ende, ein zweites axiales Ende und dazwischen Falten besitzt, welche eine elastische Verformung zulassen, dessen erstes Ende mit einer Lagerungsanordnung, die zur Lagerung auf der ersten Gelenkgabel dient, aufweist und an dessen zweitem axialen Ende ein hohlzylindrischer Befestigungsabschnitt mit einer Bohrung vorgesehen ist, ferner einen Lagerring, der zur drehbaren Lagerung um eine Drehachse an der Doppelgabel bestimmt ist, im Schutztrichter liegt und eine äußere Lagerfläche aufweist, und des weiteren einen Führungsring, der koaxial um den Lagerring und zwischen dessen Außenfläche und der Innenfläche des Schutztrichters angeordnet ist, der ferner mit einer inneren Führungsfläche auf der äußeren Lagerfläche des Lagerringes in Richtung der Drehachse verstellbar ist, der weiterhin mit einem äußeren Endabschnitt mit dem Befestigungsabschnitt verbunden ist und der davon ausgehend sich über einen Teil des mit Falten versehenen Abschnittes zu seinem inneren Ende erstreckt und der des weiteren zu dem inneren Ende hin einen Außenflächenabschnitt mit im Längsschnitt sich der Drehachse stetig annähernden Verlauf aufweist, umfaßt.

Ergänzt wird diese Schutzvorrichtung durch den üblicherweise am Traktor bzw. am Gerät vorhandenen Schutztopf, in den sie teilweise hineinragt. Von Vorteil bei dieser Ausbildung ist, daß eine relative große axiale Länge des Schutztrichters mit Falten versehen ist, die sich bis über die innere Doppelgelenkgabel erstrecken kann und bei der der Befestigungsabschnitt zusammen mit dem Führungsring noch einen erheblichen Teil der zweiten Gelenkgabel überdeckt. Der Faltenbalg wird durch den Führungsring stabilisiert. Die große, mit Falten versehene Länge erlaubt auch eine große Abwinklung, die bei solchen Gelenken in der Größenordnung von 80° liegt. Es wird insgesamt eine weitgehend geschlossene Abdeckung erzielt, so daß ein Eingriff von außen nicht möglich ist. Durch die zusätzliche Stützung des mit Falten versehenen Teils des Schutztrichters auf dem Führungsring wird auch eine große radiale Stabilität bei Einwirkung von Kräften von außen auf die Schutzvorrichtung erreicht.

In Ausgestaltung der Erfindung ist vorgesehen, daß der Führungsring mit dem Lagerring derart verbunden ist, daß sie beide zusammen ortsfest gehalten sind, wenn sich das Doppelkreuzgelenk, das die Schutzvorrichtung umgibt, dreht. Üblicherweise ist die Schutzvorrichtung gegenüber einem ortsfesten Teil, vorzugsweise dem Gerät, das die Gelenkwelle, der das Doppelkreuzgelenk zugehörig ist, treibt, festgelegt. Es ergibt sich somit ein Berührungsschutz für die sich in der Schutzvorrichtung drehenden Bauteile der Gelenkwelle, die ein Doppelkreuzgelenk als Bauteil der Antriebsanordnung umfassen. Daher ist an die Lagerungsanordnung, mit der das eine Ende des Schutztrichters verbunden ist und welche gegenüber der ersten Gelenkgabel gelagert ist, mit einem Schutzrohr angeschlossen, das mit einem weiteren Schutzrohr in Eingriff ist, welche zusammen die zwischen zwei Kreuzgelenken bzw, einem Doppelkreuzgelenk und einem Kreuzgelenk angeordnete Profilrohre, überdecken, wobei das zweite zur Gelenkwelle gehörende Gelenk ebenfalls von einer Schutzvorrichtung überdeckt wird und mittels einer Anhängung oder sonstiger geeigneter Mittel mit dem Gerät verbunden ist, so daß sie stillsteht. Die Schutzrohre weisen Mitnahmeelemente auf, so daß sie auch gegen Drehung gehalten sind und damit auch die Lagerungsanordnung halten, an die der Schutztrichter angeschlossen ist.

Zur Erzielung dieser drehfesten Verbindung ist vorgesehen, daß der Lagerring umfangsverteilt Führungsnuten aufweist, die parallel zur Drehachse verlaufen, in die der Führungsring mit entsprechend umfangsverteilt und parallel zur Drehachse verlaufenden Führungskeilen in Eingriff ist.

Diese Anordnung läßt eine Axialverstellung des Führungsringes zum Lagerring zu, so daß der Führungsring durch Komprimieren der Falten des Schutztrichters von Hand eine veränderte Lage erfahren kann, um beispielsweise den Verschluß der zweiten Gelenkgabel zur Verbindung mit einer Antriebswelle lösen zu können. Darüber hinaus wird die Außenfläche des Führungsringes zur Abstützung der Falten des Schutztrichters genutzt, um eine genügende Steifigkeit gegen von außen einwirkende Kräfte zu erzielen.

Zur Begrenzung der Verstellung des Führungsringes zum Lagerring in axialer Richtung, weg von der Lagerungsanordnung sind, am Führungsring Anschläge vorgesehen, die zur Anlage gegen den Lagerring kommen.

In der Zeichnung ist ein Ausführungsbeispiel der Erfindung schematisch dargestellt.

Es zeigt
- Figur 1: eine Antriebsanordnung mit einem Doppelkreuzgelenk und mit einer dieser zugeordneten Schutzvorrichtung im Längsschnitt,
- Figur 2: einen Schnitt II-II ausschließlich durch die Schutzvorrichtung und
- Figur 3: eine Anordnung gemäß Figur 1 in einer Ansicht.

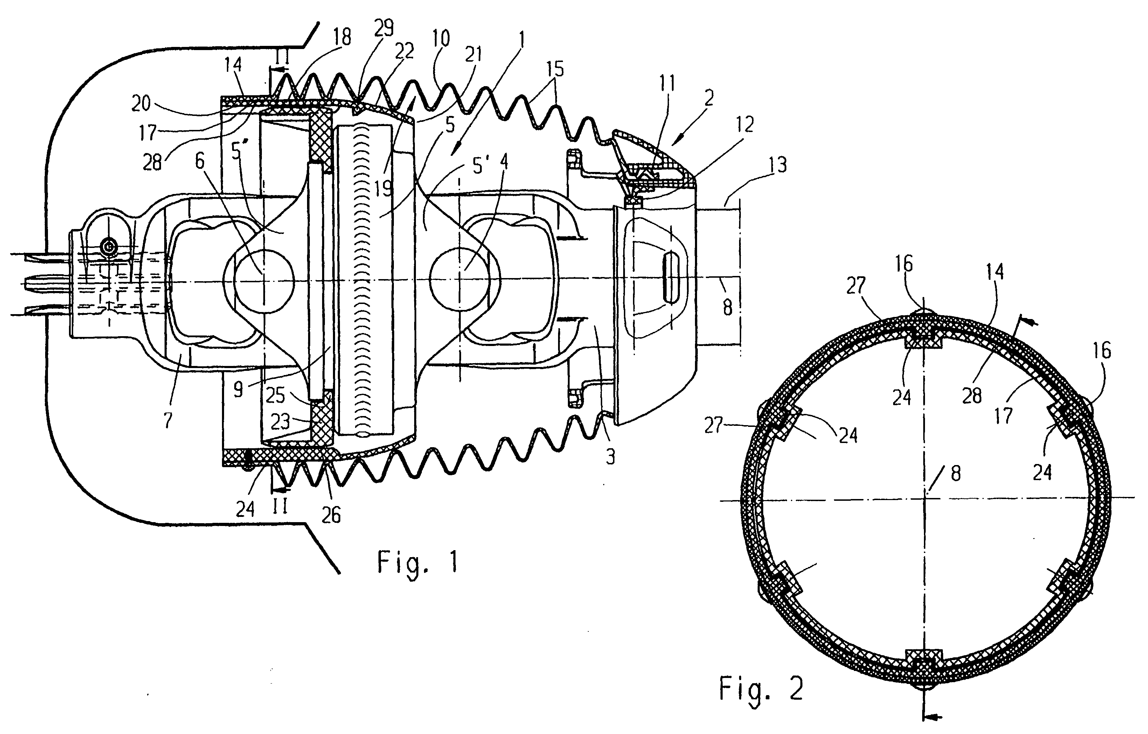

In Figur 1 ist das Doppelkreuzgelenk 1 in Ansicht dargestellt ersichtlich. Die Schutzvorrichtung 2 ist teilweise geschnitten dargestellt. In Figur 2 ist die Schutzvorrichtung im Querschnitt entsprechend der Schnittlinie II-II von Figur 1 ersichtlich.

Das Doppelkreuzgelenk 1 weist eine erste Gelenkgabel 3 auf, die beispielsweise mit einem nicht sichtbaren Profilrohr einer Zwischenwelle verbunden ist, wobei das Profilrohr über ein weiteres Profilrohr mit einem weiteren Kreuzgelenk oder Doppelkreuzgelenk verbunden ist, welches beispielsweise zum Anschluß an den Eingangszapfen eines anzutreibenden landwirtschafltlichen Gerätes dient. Die erste Gelenkgabel 3 ist durch ein erste Gelenkkreuz 4, von dem nur der Boden der Lagerbüchse, in dem es mit einem Zapfen aufgenommen ist, sichtbar ist, mit der ersten Gabel 5' der inneren Doppelgabel 5 gelenkig verbunden. Die innere Doppelgabel 5 weist des weiteren eine zweite Gabel 5'' auf, an die die zweite Gelenkgabel 7 mittels eines zweiten Gelenkkreuzes 6 gelenkig angeschlossen ist. Die zweite Gelenkgabel 7 dient beispielsweise zum Anschluß an eine Zapfwelle eines Traktors, welche nur teilweise dargestellt ist. Die innere Doppelgabel 5 weist zur zweiten Gabel 5'' hin eine Ringnut 9 auf, die auf der Drehachse 8 des Doppelkreuzgelenkes 1 zentriert ist. Sämtliche Bauteile des Doppelkreuzgelenkes 1 sind in der gestreckten Lage, d.h. bei 0° Beugewinkel dargestellt. Die Schutzvorrichtung 2 umfaßt einen Schutztrichter 10, dessen erstes axiales Ende 11 mit einer Lagerungsanordnung 12 verbunden ist. Die Lagerungsanordnung 12 selbst ist an der ersten Gelenkgabel 3 gelagert. An die Lagerungsanordnung 12 ist ein Schutzrohr 13 angeschlossen, daß das mit der ersten Gelenkgabel 3 verbundene Profilrohr überdeckt. Das Schutzrohr 13 wird über die Verbindung zu einem weiteren Schutzrohr und einer weiteren Schutzeinrichtung undrehbar zu einem Gerät gehalten. Dies bedeutet, daß nur das Doppelkreuzgelenk 1 und die daran angeschlossene Profilwelle oder das daran angeschlossene Profilrohr rotieren. Der Schutztrichter 10 weist an seinem zweiten axialen und der Lagerungsanordnung 12 entfernten Ende einen Befestigungsabschnitt 14 auf, der hohlzylindrisch gestaltet ist und eine Bohrung 17 besitzt. Der Zwischenbereich zwischen dem ersten axialen Ende 11 und dem Befestigungsabschnitt 14 ist mit um die Drehachse 8 umlaufenden Falten versehen. Das zweite axiale Ende, d.h. der Befestigungsabschnitt 14 des Schutztrichters 10 nimmt in seiner Bohrung 17 einen Führungsring 18 mit seiner Außenfläche auf, der mit einem Ende etwa bündig mit dem Befestigungsabschnitt 14 abschließt. Der Befestigungsabschnitt 14 ist mittels Schrauben 16, die umfangsverteilt angeordnet sind, am Führungsring 18 festgelegt. Der Führungsring 18 weist einen in Richtung zur Lagerungsanordnung 12 außen zunächst zylindrisch verlaufenden Abschnitt auf, der in einen Außenflächenabschnitt 22 übergeht, der sich stetig der Drehachse 8 annähert. Im vorliegenden Fall ist ein im Längsschnitt kurvenförmiger Verlauf vorgesehen. Der Führungsring 18 und der Befestigungsabschnitt 14 liegen von der Lagerungsanordnung 12 aus gesehen, hinter dem Ende der zweiten Gabel 5'' der inneren Doppelgabel 5 und überdecken damit einen erheblichen Teil auch der zweiten Gelenkgabel 7, die selbst widerum innerhalb eines nicht näher bezeichneten Schutztopfes angeordnet ist und von diesem teilweise überdeckt wird. Der Führungsring 18 weist in seinem Innenraum über den Umfang verteilt, im Querschnitt rechteckige Führungskeile 24 auf, die querschnittsgleich und parallel zur Drehachse 8 verlaufen. Im Zwischenbereich zwischen zwei auf dem Umfang um die Drehachse 8 aufeinander folgenden Führungskeile 24 ist der Führungsring 18 mit einer zylindrischen Führungsfläche 28 versehen. Diese geht dann in den sich an die Drehachse 8 annähernden Bereich über, welcher parallel zum Außenflächenabschnitt 22 verläuft. Am Ende der Führungsflächen 28 sind umfangsverteilt Anschläge 29 von der Führungsfläche 28 in Richtung zur Drehachse 8 vorstehend angebracht. Der Führungsring 18 ragt mit seinem inneren Ende 21 soweit in den Schutztrichter 10 hinein, daß sein Außenflächenabschnitt 22 der Innenfläche 19 des Schutztrichters 10 gegenüberliegt, so daß sich die Faltentäler einiger Falten 15 auf dem Außenflächenabschnitt 22 abstützen können. Der Befestigungsabschnitt 14 des Schutztrichters 10 ist mit dem Endabschnitt 20 verbunden. Der Lagerring 23 weist zu den Führungskeile 24 entsprechend umfangsverteilt und sich parallel zur Drehachse 8 erstreckende Führungsnuten 27 auf, in welche die Führungskeile 24 eingreifen. Im Bereich zwischen den Führungsnuten 27 ist die äußere Lagerfläche 26 des Lagerringes 23 zylindrisch und zu seinen axialen Enden hin konisch oder ballig verjüngt ausgebildet. Der Lagerring 23 greift mit seinem ringförmigen Lagerabschnitt 25 in die Ringnut 9 der inneren Doppelgabel 5 ein. Der Lagerring 23 ist also drehfest mit dem Führungsring 18 und dieser widerrum drehfest mit dem Schutztrichter 21 verbunden. Diese stehen fest, wenn das Doppelkreuzgelenk 1 rotiert. Bei Abwinklung des Doppelkreuzgelenkes 1 erfolgt eine Kompression oder Streckung der Falten 15. Aus der Kompression resultiert eine Beaufschlagung des Führungsringes 18, wobei dieser mit seinen Anschlägen 29 gegen den Lagerring 23 in der äußerst nach links verschobenen Position zur Anlage kommt. Wenn auf den Schutztrichter 10 von außen Kräfte einwirken, kann er sich mit seinen Falten an dem Außenflächenabschnitt 22 des Führungsringes 18 abstützen. Dieser stützt sich widerum über den Lagerring 23 an der inneren Doppelgabel 5 ab. Es ist ferner erkennbar, daß der gesamte Bereich von dem äußeren Endabschnitt 20 bis zur Lagerungsanordnung 12 vollständig durch den Schutztrichter 10 abgedeckt ist. Die vorbeschriebene Anordnung ermöglicht eine einwandfreie Auslenkung auch unter Beugewinkel. Durch die Stützungsmaßnahmen knickt der Schutztrichter 10 weder ein, noch kann er mit den rotierenden Bauteilen des Doppelkreuzgelenkes 1 in Berührung kommen.

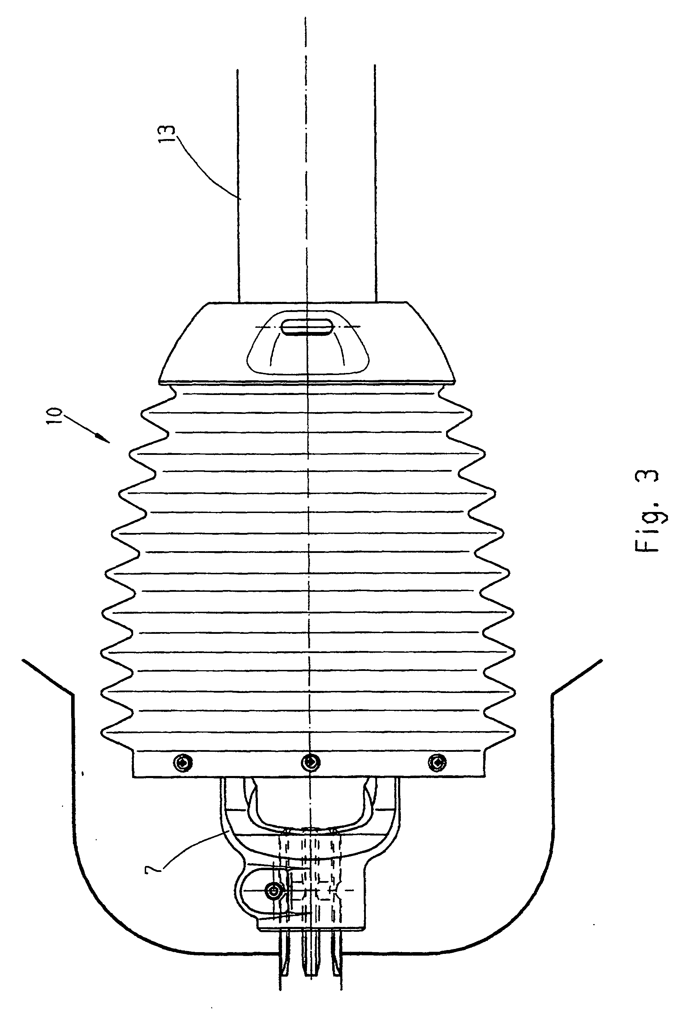

In Figur 3 ist eine Ansicht auf den Schutztrichter 10 ersichtlich, der das nur zum Teil sichtbare Doppelkreuzgelenk 1 abdeckt. Es ist lediglich noch ein Teil der zweiten Gelenkgabel 7 erkennbar.

### Bezugszeichenliste

- 1: Doppelkreuzgelenk
- 2: Schutzvorrichtung
- 3: erste Gelenkgabel
- 4: erstes Gelenkkreuz
- 5: innere Doppelgabel
- 5': erste Gabel des Doppelgelenkes
- 5'': zweite Gabel des Doppelgelenkes
- 6: zweites Gelenkkreuz
- 7: zweite Gelenkgabel
- 8: Längsachse / Drehachse
- 9: Ringnut
- 10: Schutztrichter
- 11: erstes axiales Ende des Schutztrichters
- 12: Lagerungsanordnung
- 13: Schutzrohr
- 14: Befestigungsabschnitt / zweites axiales Ende des Schutztrichters
- 15: Falten
- 16: Schrauben
- 17: Bohrung
- 18: Führungsring
- 19: Innenfläche des Schutztrichters
- 20: äußerer Endabschnitt
- 21: inneres Ende
- 22: Außenflächenabschnitt
- 23: Lagerring
- 24: Führungskeilen
- 25: Lagerabschnitt
- 26: äußere Lagerfläche
- 27: Führungsnut
- 28: Führungsflächen
- 29: Anschlag

## Patentansprüche

1. Schutzvorrichtung (2) für eine Antriebsanordnung, die ein Doppelkreuzgelenk (1) mit einer inneren Doppelgabel (5), einer ersten Gelenkgabel (3), einer zweiten Gelenkgabel (7) und je ein Gelenkkreuz (4, 6) zur gelenkigen Verbindung der ersten Gelenkgabel (3) und der zweiten Gelenkgabel (7) jeweils mit einer der zur Doppelgabel (5) gehörenden Gabeln (5', 5'') aufweist, umfassend
einen Schutztrichter (10), der ein erstes axiales Ende (11), ein zweites axiales Ende und dazwischen Falten (15) besitzt, welche eine elastische Verformung zulassen, dessen erstes Ende (11) mit einer Lagerungsanordnung (12), die zur Lagerung auf der ersten Gelenkgabel (3) dient, verbunden ist und an dessen zweitem axialen Ende ein hohlzylindrischer Befestigungsabschnitt (14) mit einer Bohrung (17) vorgesehen ist,
einen Lagerring (23), der zur drehbaren Lagerung um eine Drehachse (8) an der Doppelgabel (5) bestimmt ist, im Schutztrichter (10) liegt und der eine äußere Lagerfläche (26) aufweist und
des weiteren umfassend einen Führungsring (18), der koaxial um den Lagerring (23) und zwischen dessen äußerer Lagerfläche (26) und der Innenfläche (19) des Schutztrichters (10) angeordnet ist, der ferner mit einer inneren Führungsfläche (28) auf der äußeren Lagerfläche (26) des Lagerringes (23) in Richtung der Drehachse (8) verstellbar ist, der weiterhin mit einem äußeren Endabschnitt (20) mit dem Befestigungsabschnitt (14) verbunden ist und der sich davon ausgehend über einen Teil des mit Falten (15) versehenen Abschnittes zu seinem inneren Ende (21) erstreckt und der des weiteren zu dem inneren Ende (21) hin einen Außenflächenabschnitt (22) mit einem im Längsschnitt sich der Drehachse (8) stetig annähernden Verlauf aufweist.

2. Schutzvorrichtung nach Anspruch 1,
**dadurch gekennzeichnet,**
**daß** der Führungsring (18) um die Drehachse (8) fest mit dem Lagerring (23) verbunden ist.

3. Schutzvorrichtung nach Anspruch 2,
**dadurch gekennzeichnet,**
**daß** der Lagerring (23) umfangsverteilt Führungsnuten (27) aufweist, die parallel zur Drehachse (8) verlaufen, in die der Führungsring (18) mit entsprechend umfangsverteilt und parallel zur Drehachse (8) verlaufenden Führungskeilen (24) in Eingriff ist.

4. Schutzvorrichtung nach Anspruch 1,
**dadurch gekennzeichnet,**
**daß** die Außenfläche (22) des Führungsringes (18) zur Abstützung der Falten (15) des Schutztrichters (10) dient.

5. Schutzvorrichtung nach Anspruch 1,
**dadurch gekennzeichnet,**
**daß** die axiale Bewegung des Führungsringes (18) zum Lagerring (23) weg von der Lagerungsanordung (12) durch Anschläge (29) begrenzt ist.

## Claims

1. A protection device (2) for a drive assembly, including a double universal joint (1) with an inner double yoke (5), a first joint yoke (3), a second joint yoke (7) and a cross member (4, 6) each for connecting in an articulated manner the first joint yoke (3) and the second joint yoke (7) respectively to one of the yokes (5', 5") belonging to the double yoke (5), comprising
a protective cone (10), having a first axial end (11) and a second axial end and therebetween folds (15), enabling an elastic deformation, and which first end (11) of the protective cone (10) being connected to a bearing assembly (12), serving for the support on the first joint yoke (3) and which second axial end of the protective cone (10) being provided with a hollow-cylindrical fixing portion (14) with a bore (17),
a bearing ring (23), serving for the rotational support around a rotational axis (8) at the double yoke (5) which is arranged within the protective cone (10) and has an outer bearing face (26) and
further comprising a guiding ring (18), arranged coaxially around the bearing ring (23) and between the outer bearing face (26) of the bearing ring and the inner face (19) of the protective cone (10), which is further displaceable with an inner guiding face (23) in the direction of the rotational axis (8) on the outer bearing face (26) of the bearing ring (23), and which is further connected with an outer end portion (20) to the fixing portion (14) and which extends starting therefrom over a part of the portion provided with the folds (15) to its inner end (21) and which, furthermore, has towards the inner end (21) an outer face portion (22) with an extension which approaches continuously, when seen in the longitudinal section, the rotational axis (8).

2. Protection device according to claim 1,
**characterised in that**
the guiding ring (18) is firmly connected to the bearing ring (23) around the rotational axis (8).

3. Protection device according to claim 2,
**characterised in that**
the bearing ring (23) has circumferentially distributed guiding grooves (27), extending parallel to the rotational axis (8), and into which the guiding ring (18) engages with guiding keys (24) which are correspondingly circumferentially distributed to the rotational axis (8) and which extend parallel to the rotational axis (8).

4. Protection device according to claim 1,
**characterised in that**
the outer face (22) of the guiding ring (18) serves for the support of the folds (15) of the protective cone (10).

5. Protection device according to claim 1,
**characterised in that**
the axial movement of the guiding ring (18) relative to the bearing ring (23) away from the bearing assembly (12) is delimited by stops (29).

## Revendications

1. Dispositif de protection (2) pour un dispositif d'entraînement, qui comporte un joint universel double (1) pourvu d'une fourche intérieure double (5), une première fourche d'articulation (3), une seconde fourche d'articulation (7) et respectivement un joint (4, 6) pour établir la liaison articulée de la première fourche d'articulation (3) et de la seconde fourche d'articulation (7) respectivement avec l'une des fourches (5', 5") faisant partie de la fourche double (5), comprenant
un entonnoir de protection (10), qui possède une première extrémité axiale (11), une seconde extrémité axiale et, entre elles, des plis (15), qui autorisent une déformation élastique, et dont la première extrémité (11) est reliée à un dispositif de palier (12), qui est utilisé pour réaliser un support sur la première fourche d'articulation (3), et sur la seconde extrémité axiale duquel est prévu une section de fixation en forme de cylindre creux (14) comportant un perçage (17),
une bague de palier (23), qui est destinée à réaliser un support en rotation autour d'un axe de rotation (8) sur la fourche double (5), est située dans l'entonnoir de protection (10) et possède une surface extérieure de palier (26), et
comprenant d'autre part un anneau de guidage (18), qui est monté coaxialement autour de la bague de palier (23) et entre la surface extérieure de support (26) de cette bague et la surface intérieure (19) de l'entonnoir de protection (10) et qui est en outre réglable au moyen d'une surface intérieure de guidage (28) sur la surface extérieure de support (26) de la bague de palier (23) dans la direction de l'axe de rotation (8), est reliée d'autre part par une section d'extrémité extérieure (20) à la section de fixation (14) et s'étend, à partir de là, sur une partie de la section pourvue de plis (15), jusqu'à son extrémité intérieure (21) et comporte d'autre part, en direction de l'extrémité intérieure (21), une section de surface extérieure (22) possédant une configuration qui, en coupe longitudinale, se rapproche continûment de l'axe de rotation (8).

2. Dispositif de protection selon la revendication 1, **caractérisé en ce**
**que** l'anneau de guidage (18) est relié rigidement, autour de l'axe de rotation (8), à la bague de palier (23).

3. Dispositif de protection selon la revendication 2, **caractérisé en ce**
**que** l'anneau de palier (23) comporte des rainures de guidage (27), qui sont réparties sur sa périphérie et s'étendent parallèlement à l'axe de rotation (8) et dans lesquelles l'anneau de guidage (18) s'engage par des coins de guidage (24) qui sont répartis de façon correspondante sur la périphérie et s'étendent parallèlement à l'axe de rotation (8).

4. Dispositif de protection selon la revendication 1, **caractérisé en ce**
**que** la surface extérieure (22) de l'anneau de guidage (18) est utilisée pour supporter les plis (15) de l'entonnoir de protection (10).

5. Dispositif de protection selon la revendication 1, **caractérisé en ce que** le déplacement axial de l'anneau de guidage (18), s'écartant du dispositif de palier (12), par rapport à la bague de palier (23), est limité par des butées (29).
